# EUROPÄISCHE PATENTSCHRIFT

(11) **EP 1 188 000 B1**
(45) Veröffentlichungstag und Bekanntmachung des Hinweises auf die Patenterteilung: **09.02.2005**
(21) Anmeldenummer: 99963185.6
(22) Anmeldetag: 03.11.1999
(51) Int. Cl.: F16F 9/05

(54) **LUFTFEDERSYSTEM**
PNEUMATIC SUSPENSION SYSTEM
SYSTEME DE SUSPENSION PNEUMATIQUE

(30) Priorität: 03.12.1998 DE 19855814
(43) Veröffentlichungstag der Anmeldung: 20.03.2002
(73) Patentinhaber: Vibracoustic GmbH & Co. KG, 69469 Weinheim (DE)
(72) Erfinder: BERG, Jürgen, D-22885 Barsbüttel (DE)
(74) Vertreter: Mattausch, Klaus
(86) Internationale Anmeldenummer: PCT/DE1999/003503
(87) Internationale Veröffentlichungsnummer: WO 2000/032959

(56) Entgegenhaltungen:
- EP-A- 0 561 394
- WO-A-98/26947
- DE-A- 2 064 751
- DE-A- 19 842 733
- GB-A- 854 823
- GB-A- 1 375 339
- US-A- 2 901 242

## Beschreibung

Die Erfindung betrifft ein Luftfedersystem, bestehend mindestens aus folgenden Luftfederbauteilen, nämlich aus:
- einem Luftfederbalg aus elastomerem Werkstoff, der eine volumenvariable Luftkammer einschließt;
- einem Luftfederdeckel, an dem das eine Ende des Luftfederbalges mittels eines Klemmringes oder dergleichen befestigt ist;
- einem Luftfederkolben, an dem das andere Ende des Luftfederbalges ebenfalls mittels eines Klemmringes oder dergleichen befestigt ist und an dessen Außenwand der Luftfederbalg unter Bildung einer Rollfalte abrollen kann;
- einem Radführungselement;
- einem Gelenk als Anlenkungsmittel in Bezug auf das Radführungselement; sowie aus
- einer Karosserie.

Die oben genannten Luftfederbauteile sind so angeordnet, daß innerhalb des Luftfedersystems unter Verzicht auf eine zentrische Zwangsführung nur ein einziges Gelenk als Anlenkungsmittel in Bezug auf das Radführungselement vorhanden ist.

Ein gattungsgemäßes Luftfedersystem ohne zentrische Zwangsführung bei nur einem einzigen Gelenk ist aus der Britischen Patentschrift 854 823 oder auch aus der US-A-2 901 242 bekannt, und zwar im Unterschied zu der Ausführungsform gemäß der Offenlegungsschrift DE 197 04 433 A1, die eine zentrische Zwangsführung bei zwei Gelenken beinhaltet.

Bei herkömmlichen Luftfedersystemen, insbesondere ohne innenliegende Dämpfer, wird der Luftfederdeckel an der Karosserie und der Luftfederkolben an einem Radführungselement befestigt. Bei Federvorgängen bewegt sich nun der Kolben entsprechend der Radführungskinematik relativ zum Deckel, wobei ein symmetrisches Abrollen des Luftfederbalges auf dem Kolben nicht gewährleistet ist.

Die Aufgabe der Erfindung besteht nun darin, ein Luftfedersystem bereitzustellen, bei dem die Radführungskinematik in Bezug auf ein symmetrisches Abrollen des Luftfederbalges ohne Komfort beeinflussende Innenführungselemente realisiert wird.

Gelöst wird diese Aufgabe dadurch, daß
- der Luftfederkolben als oberes Bauteil an der Karosserie angebunden ist, wobei die Rollfalte des Luftfederbalges nach oben ausgebildet ist; und daß
- der Luftfederdeckel als unteres Bauteil innerhalb des Deckelbodens mit dem Gelenk verbunden ist, und zwar unter zentrischer Anbindung des Luftfederdeckels an das Radführungselement mittels des Gelenkes.

Vorteilhafte Gestaltungsvarianten des neuen Luftfedersystems sind:
- Das Gelenk ist als Kugelgelenk, als Metall-Gummi-Gelenk oder als buchsenförmiges Bauteil ausgeführt.
- Der Luftfederbalg ist mit einer Außenführung versehen, wobei die Befestigung der Außenführung an einem Luftfederbauteil starr oder elastisch ausgeführt ist.
- Das Luftfedersystem ist mit einem Schutzfaltenbalg aus elastomerem Werkstoff oder TPE ausgerüstet, der am Luftfederbalg oder einem anderen Luftfederbauteil, beispielsweise an der Außenführung, befestigt ist.
- Das Luftfedersystem ist mit einem Stützring für den Luftfederbalg ausgerüstet, wobei sich der Stützring im Bereich des Luftfederdeckels befindet.

Der Luftfederbalg ist zumeist mit einer Verstärkungseinlage versehen (DE 36 43 073 A1).

Die Luftkammer kann ferner über einen Kanal mit einem Zusatzluftvolumen zur Komfortsteigerung des Luftfedersystems verbindbar sein (DE 197 04 433 A1).

Die Erfindung wird nun anhand von Ausführungsbeispielen unter Bezugnahme auf schematische Zeichnungen erläutert. Es zeigen:
- Fig. 1: ein Luftfedersystem mit Kugelgelenk;
- Fig. 2: ein Luftfedersystem mit buchsenförmigen Bauteil als gelenk.

In Verbindung mit diesen Figuren gilt folgende Bezugsziffernliste:
- 1. 1"": Luftfedersystem
- 2: Karosserie
- 3: Luftfederkolben (Abrollkolben)
- 4, 4'''': Luftfederbalg
- 5: Luftkammer
- 6: Rollfalte
- 7, 7"": Luftfederdeckel
- 8: Gelenk
- 9: Radführungselement
- 10: Klemmring
- 11: Außenführung
- 12: Schutzfaltenbalg
- 15: buchsenförmiges Bauteil
- 16: Kern
- 17: Polster aus elastomerem Werkstoff
- 18: Außenhülse
- 19: Stützring

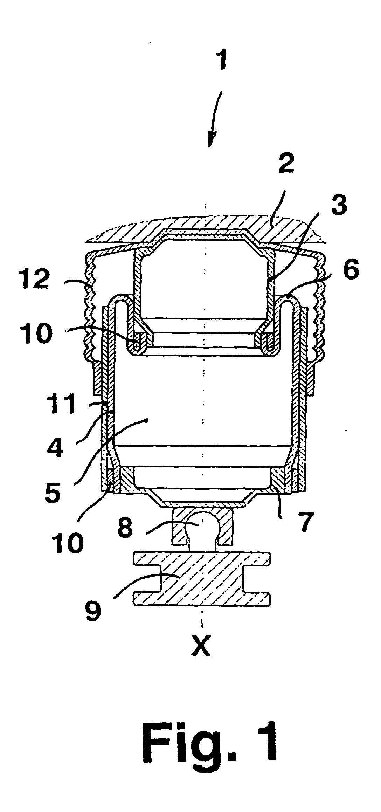

Fig. 1 zeigt ein Luftfedersystem 1, bei dem der Luftfederkolben 3 als oberes Bauteil an der Karosserie 2 angebunden ist, wobei die Rollfalte 6 des Luftfederbalges 4 nach oben ausgebildet ist. Der Luftfederbalg aus elastomerem Werkstoff schließt dabei eine volumenvariable Luftkammer 5 ein.

Der Luftfederdeckel 7 als unteres Bauteil ist innerhalb des Deckelbodens mit dem Gelenk 8 (Kugelgelenk) verbunden, und zwar unter zentrischer Anbindung (d.h. in Bezug auf die Mittenebene X) des Luftfederdeckels an das Radführungselement 9 mittels des Gelenkes.

Ferner ist das Luftfedersystem 1 mit einem Schutzfaltenbalg 12 aus elastomerem Werkstoff oder TPE (thermoplastisches Elastomer) ausgerüstet, dessen unteres Teil an der Außenführung 11 befestigt ist. Die Befestigung kann dabei starr oder elastisch ausgeführt sein.

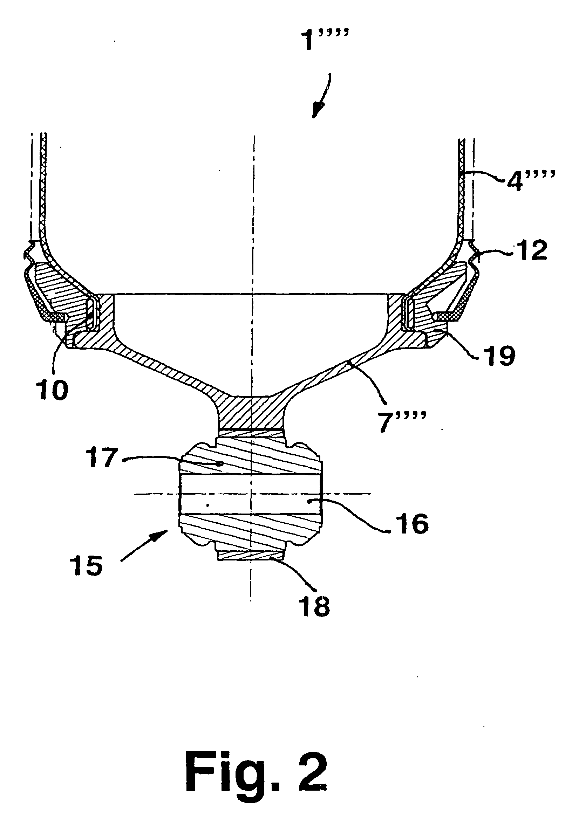

Fig. 2 zeigt ein Luftfedersystem **1**"" mit dem Grundaufbau gemäß Fig. 1.

Der Luftfederdeckel 7"" als unteres Bauteil ist innerhalb des Deckelbodens mit dem Gelenk verbunden. Das Gelenk ist hier als buchsenförmiges Bauteil **15** ausgerüstet, das einen Kern **16,** ein Polster **17** aus elastomerem Werkstoff und eine Außenhülse **18** umfaßt. Der Kern selbst steht mit dem Radführungselement in Verbindung.

Das Luftfedersystem **1**"" (hier ohne Außenführung) ist mit einem Stützring **19** für den Luftfederbalg **4**"" ausgerüstet. Der Stützring befindet sich dabei im Bereich des Luftfederdeckels **7**"", und zwar dort, wo der Luftfederbalg mittels des Klemmringes **10** am Luftfederdeckel befestigt ist.

Der untere Teil des Schutzfaltenbalges **12** ist hier am Klemmring **19** befestigt.

## Patentansprüche

1. Luftfedersystem (1, 1''''), bestehend mindestens aus folgenden Luftfederbauteilen, nämlich aus :
- einem Luftfederbalg (4, 4"") aus elastomerem Werkstoff, der eine volumenvariable Luftkammer (5, 5', 5", 5''') einschließt;
- einem Luftfederdeckel (7, 7''''), an dem das eine Ende des Luftfederbalges mittels eines Klemmringes (10) oder dergleichen befestigt ist;
- einem Luftfederkolben (3) an dem das andere Ende des Luftfederbalges ebenfalls mittels eines Klemmringes (10) oder dergleichen befestigt ist und an dessen Außenwand der Luftfederbalg unter Bildung einer Rollfalte (6) abrollen kann;
- einem Radführungselement (9);
- einem Gelenk (8) als Anlenkungsmittel in Bezug auf das Radführungselement; sowie aus
- einer Karosserie (2); wobei
- die Luftfederbauteile so angeordnet sind, daß innerhalb des Luftfedersystems unter Verzicht auf eine zentrische Zwangsführung nur ein einziges Gelenk (8) als Anlenkungsmittel in Bezug auf das Radführungselement (9) vorhanden ist,
**dadurch gekennzeichnet, daß**
- der Luftfederkolben (3) als oberes Bauteil an der Karosserie (2) angebunden ist, wobei die Rollfalte (6) des Luftfederbalges (4) nach oben ausgebildet ist; und daß
- der Luftfederdeckel (7) als unteres Bauteil innerhalb des Deckelbodens mit dem Gelenk (8) verbunden ist, und zwar unter zentrischer Anbindung des Luftfederdeckels an das Radführungselement (9) mittels des Gelenkes.

2. Luftfedersystem nach Anspruch 1, **dadurch gekennzeichnet, daß** das Gelenk (8) als Kugelgelenk, als Metall-Gummi-Gelenk oder als buchsenförmiges Bauteil (15) ausgeführt ist.

3. Luftfedersystem nach einem der Ansprüche 1 bis 2, **dadurch gekennzeichnet, daß** der Luftfederbalg (4) mit einer Außenführung (11) versehen ist, wobei die Befestigung der Außenführung an einem Luftfederbauteil starr oder elastisch ausgeführt ist.

4. Luftfedersystem nach einem der Ansprüche 1 bis 3, **dadurch gekennzeichnet, daß** dieses mit einem Schutzfaltenbalg (12) aus elastomerem Werkstoff oder TPE ausgerüstet ist, der am Luftfederbalg (4) oder einem anderen Luftfederbauteil, beispielsweise an der Außenführung (11), befestigt ist.

5. Luftfedersystem nach einem der Ansprüche 1 bis 4, **dadurch gekennzeichnet, daß** dieses mit einem Stützring (19) für den Luftfederbalg (4'''') ausgerüstet ist, wobei sich der Stützring im Bereich des Luftfederdeckels (7'''') befindet.

## Claims

1. A pneumatic suspension system (1, 1'''') comprising at least the following pneumatic spring components, namely:
- a pneumatic spring bellows (4, 4'''') of elastomeric material which encloses an air chamber (5, 5', 5'', 5''') of variable volume;
- a pneumatic spring cover (7, 7'''') to which one end of the pneumatic spring bellows is fastened by means of a clamping ring (10) or the like;
- a pneumatic spring piston (3) to which the other end of the pneumatic spring bellows is fastened likewise by means of a clamping ring (10) or the like and the pneumatic spring bellows can roll along the outer wall of the said pneumatic spring piston with a rolling fold (6) being formed;
- a wheel-guiding element (9);
- a joint (8) as means of articulation with respect to the wheel-guiding element; and
- a vehicle body (2);
- the pneumatic spring components being arranged in such a manner that within the pneumatic suspension system there is just a single joint (8) as means of articulation with respect to the wheel-guiding element (9) with a centric positive-guidance means being omitted,
**characterized in that**
- the pneumatic spring piston (3), as the upper component, is connected to the vehicle body (2), with the rolling fold (6) of the pneumatic spring bellows (4) being formed upwards; and
- the pneumatic spring cover (7), as the lower component, is connected within the cover base to the joint (8), to be precise with a centric connection of the pneumatic spring cover to the wheel-guiding element (9) by means of the joint.

2. A pneumatic suspension system according to claim 1, **characterized in that** the joint (8) is designed as a ball-and-socket joint, as a metal/rubber joint or as a bushing-shaped component (15).

3. A pneumatic suspension system according to either of claims 1 and 2, **characterized in that** the pneumatic spring bellows (4) is provided with an outer guide (11), the fastening of the outer guide to a pneumatic spring component being designed to be rigid or elastic.

4. A pneumatic suspension system according to any one of claims 1 to 3, **characterized in that** the latter is equipped with a protective bellows (12) of elastomeric material or TPE which is fastened to the pneumatic spring bellows (4) or to another pneumatic spring component, for example to the outer guide (11).

5. A pneumatic suspension system according to any one of claims 1 to 4, **characterized in that** the latter is equipped with a supporting ring (19) for the pneumatic spring bellows (4''''), the supporting ring being situated in the region of the pneumatic spring cover (7'''').

## Revendications

1. Système de suspension pneumatique (1, 1''''), constitué au moins des éléments de suspension pneumatique suivants, à savoir constitué :
- d'un soufflet de suspension pneumatique (4, 4'''') en matière élastomère, qui enferme une chambre d'air (5, 5', 5", 5''') de volume variable ;
- d'un couvercle de suspension pneumatique (7, 7''''), auquel l'une des extrémités du soufflet de suspension pneumatique est fixée au moyen d'une bague de serrage (10) ou analogue ;
- d'un piston de suspension pneumatique (3), auquel l'autre extrémité du soufflet de suspension pneumatique est fixée également au moyen d'une bague de serrage (10) ou analogue, et sur la paroi extérieure duquel le soufflet de suspension pneumatique peut se dérouler en formant un pli enroulé (6) ;
- d'un élément de guidage de roue (9) ;
- d'une articulation (8), comme moyen d'articulation par rapport à l'élément de guidage de roue ;
- et d'une carrosserie (2) ;
- les éléments de suspension pneumatique étant disposés de telle sorte qu'à l'intérieur du système de suspension pneumatique, en renonçant à un guidage forcé centré, une seule articulation (8) est présente comme moyen d'articulation par rapport à l'élément de guidage de roue (9),
**caractérisé en ce que**
- le piston de suspension pneumatique (3) est rattaché en tant qu'élément supérieur à la carrosserie (2), le pli enroulé (6) du soufflet de suspension pneumatique (4) étant réalisé vers le haut ;
et **en ce que**
- le couvercle de suspension pneumatique (7) est relié en tant qu'élément inférieur à l'intérieur du fond de couvercle à l'articulation (8), et ce avec rattachement centré du couvercle de suspension pneumatique à l'élément de guidage de roue (9) au moyen de l'articulation.

2. Système de suspension pneumatique selon la revendication 1, **caractérisé en ce que** l'articulation (8) est réalisée sous forme d'articulation sphérique, d'articulation métal-caoutchouc ou d'élément (15) en forme de douille.

3. Système de suspension pneumatique selon la revendication 1 ou 2, **caractérisé en ce que** le soufflet de suspension pneumatique (4) est pourvu d'un guidage extérieur (11), la fixation du guidage extérieur sur un élément de suspension pneumatique étant réalisée rigide ou élastique.

4. Système de suspension pneumatique selon l'une des revendications 1 à 3, **caractérisé en ce qu'**il est équipé d'un soufflet de protection (12) en matériau élastomère ou en TPE, qui est fixé sur le soufflet de suspension pneumatique (4) ou sur un autre élément de suspension pneumatique, par exemple sur le guidage extérieur (11).

5. Système de suspension pneumatique selon l'une des revendications 1 à 4, **caractérisé en ce qu'**il est équipé d'une bague de soutien (19) pour le soufflet de suspension pneumatique (4''''), la bague de soutien se trouvant dans la région du couvercle de suspension pneumatique (7'''').
